# EUROPÄISCHE PATENTSCHRIFT

(11) **EP 1 672 400 B1**
(45) Veröffentlichungstag und Bekanntmachung des Hinweises auf die Patenterteilung: **07.05.2008**
(21) Anmeldenummer: 05025109.9
(22) Anmeldetag: 17.11.2005
(51) Int. Cl.: G02B 6/36, H04B 10/22

(54) **Optischer Drehübertrager**
Optical rotary joint
Joint optique tournant

(30) Priorität: 15.12.2004 DE 102004060756; 07.03.2005 DE 102005010845
(43) Veröffentlichungstag der Anmeldung: 21.06.2006
(73) Patentinhaber: Schleifring und Apparatebau GmbH, 82256 Fürstenfeldbruck (DE)
(72) Erfinder: Isert, Maren, 80689 München (DE); Schilling, Harry, 85072 Eichstätt (DE); Rank, Matthias, 93497 Willmering (DE)
(74) Vertreter: Lohr, Georg

(56) Entgegenhaltungen:
- WO-A-03/069392
- WO-A-03/098846
- US-A- 4 646 086
- US-A- 4 778 263
- US-A- 4 796 183
- US-A1- 2002 021 878

## Beschreibung

### Technisches Gebiet

Die Erfindung betrifft eine Vorrichtung zur Übertragung optischer Signale zwischen gegeneinander drehbaren Einheiten. Derartige Vorrichtungen werden vorzugsweise in Computertomografen eingesetzt.

### Stand der Technik

Zur Übertragung optischer Signale zwischen gegeneinander drehbaren Einheiten, insbesondere mit einem freien Innendurchmesser sind verschiedene Vorrichtungen bekannt. Grundsätzlich besteht hierin das Problem, ein Mittel zum Transport von Licht entlang des Umfangs der Vorrichtung sowie geeignete Mittel zur ein- und Auskopplung von Licht zu gestalten. Zum Einsatz in Computertomografen müssen derartige Vorrichtungen große freie Innendurchmesser in einer Größenordnung von 1 Meter aufweisen. Die Umfangsgeschwindigkeit bei der Rotation kann in einer Größenordnung von 20 m/s liegen. Gleichzeitig sollten Datenraten mit über 1 Gigabit pro Sekunde (GBaud) möglich sein.

So offenbart die US 4,109,997 einen optischen Drehübertrager, bei dem der Transport von Licht entlang des Umfangs durch Reflexion an zwei gegenüberliegenden Flächen (101, 1) erfolgt. Zur Ein- bzw. Auskopplung von Licht sind Lichtleiter bzw. Glasfasern vorgesehen, wobei die Bündelung bzw. Fokussierung des Lichtstrahls mittels Linsen erfolgt. Diese Vorrichtung weist allerdings eine ganze Reihe von Nachteilen auf. So ist die optische Durchgangsdämpfung aufgrund mehrfacher Reflexionen unter relativ steilen Winkeln vergleichsweise hoch. Somit werden hohe Sendeleistungen im optischen Sender benötigt. Weiterhin sind aufgrund der gegenüberliegenden verspiegelten Flächen die Fertigungskosten relativ hoch. Eine breitbandige Datenübertragung mit Periodendauern des Modulationssignals, welche wesentlich geringer als die Laufzeit des Signals um den Umfang der Vorrichtung sind, ist nicht möglich, da bei Positionen des Empfängers nahe am Sender ein Mehrwegeempfang von Signalen auftritt. So werden gleichzeitig Signale, die auf kurzem Wege vom Sender empfangen werden sowie gleichzeitig Signale, welche wenigstens einmal um den Umfang der Vorrichtung reflektiert wurden empfangen. Die Laufzeitdifferenz muss klein gegenüber der Periodendauer des Modulationssignals sein. Somit ergibt sich bei einem Innendurchmesser von ca. einem Meter eine Gesamtlaufzeit um den Umfang von ca. 10 Nanosekunden. Dadurch sind beispielsweise bei der Übertragung von digitalen Signalen Bitdauern von maximal 50 Nanosekunden, entsprechend einer maximalen Übertragungsrate von 20 MBaud realisierbar.

Eine Verbesserung des optischen Systems ist in der US 4,525,025 offenbart. So ist darin insbesondere in Fig. 10 ein besonders geeigneter Graben zur Übertragung optischer Signale dargestellt. Dieser besteht nur noch aus einem Teil und ist daher kostengünstig herstellbar. Allerdings ist auch in diese Patentschrift keine wirksame Lösung des Problems der Bandbreitenbegrenzung angegeben. Somit ist diese Vorrichtung nur für kleine Durchmesser geeignet.

Eine Verbesserung der optischen Ein- bzw. Auskopplung ist in der US 4,555,631 offenbart. Darin erfolgt die Einkopplung optischer Signale in einen verspiegelten Zylinder mittels zweier Spiegel. Zur Auskopplung ist ein zusätzliches Auskoppelelement, welches an einer festen Position im Graben angeordnet ist, vorgesehen. Auch hier ist auch das Problem der Bandbreitenbegrenzung nicht gelöst. So wird das Licht auf zwei Wegen in entgegengesetzten Richtungen von der Einkoppelstelle zur Auskoppelstelle geleitet und schließlich gemeinsam in einem Empfänger ausgewertet. Auch hierbei gilt die Einschränkung, dass die Periodendauer des Modulationssignals wesentlich geringer als die Laufzeit des Lichts um den Umfang der Vorrichtung sein muss.

Um die Dämpfung der Übertragungsstrecke zu verringern und die übertragbare Bandbreite zu vergrößern wird in der US 6,104,849 eine Übertragung in mehreren verkürzten Segmenten vorgeschlagen. Durch die verkürzten Segmente ergibt sich eine verringerte Dämpfung. Die maximale Bandbreite ist hier umgekehrt proportional zur Länge der Segmente. Somit lässt sich mit kürzeren Segmenten eine höhere Bandbreite erzielen. Allerdings ist hierfür auch eine entsprechend höhere Anzahl optischer Sender bzw. Empfänger zur Abdeckung des vollen Kreisumfangs notwendig. Somit steigen die Systemkosten proportional zur Bandbreite.

In der DE 195 43 386 C1 ist in allgemeiner Form eine Vorrichtung zur breitbandigen Signalübertragung beschrieben, welche zwar eine hohe Bandbreite ermöglicht, aber keinerlei Hinweise auf eine Übertragung mit hoher Übertragungsqualität gibt. Es ist der Inhalt der DE 195 43 386 C1 durch Bezugnahme mit in dieses Dokument aufgenommen.

In der WO 03/069392 ist eine Vorrichtung zur breitbandigen Signalübertragung mittels eines in Längsrichtung geteilten Lichtleiters offenbart.

In der WO 03/098846 A1 ist eine Vorrichtung zur optischen Signalübertragung offenbart. Hierbei wird mittels eines variablen optischen Dämpfungsglied die optische Dämpfung des optischen Pfades in einem vorgegebenen Toleranzbereich gehalten.

### Darstellung der Erfindung

Der Erfindung liegt die Aufgabe zugrunde, eine relativ kostengünstige Vorrichtung zur Übertragung optischer Signale zwischen zwei gegeneinander drehbaren Einheiten derart zu gestalten, dass eine zuverlässige Übertragung mit niedriger optischer Dämpfung bei großen Durchmessern, hohen mechanischen Bewegungsgeschwindigkeiten und hohen Datenraten ermöglicht wird. Weiterhin ist die Aufgabe einer besonderen Ausgestaltung der Erfindung, die Vorrichtung derart zu gestalten, dass auch Signale zu übertragen sind, deren Periodendauern klein gegenüber der Ausbreitungsdauer des Lichtes um den Umfang der Vorrichtung sind.

Erfindungsgemäße Lösungen dieser Aufgabe sind in Anspruch 1 angegeben. Weiterbildungen der Erfindung sind Gegenstand der abhängigen Ansprüche.

Die erfindungsgemäße Vorrichtung umfasst einen Lichtleiter 3, welcher entlang einer Kreisbahn an einer ersten Einheit 1 angeordnet ist. Der Einfachheit halber wird hier nur ein Lichtleiter beschrieben. Selbstverständlich können auch mehrere erfindungsgemäße Anordnungen mit jeweils einem Lichtleiter parallel geschaltet werden. Mit dem Lichtleiter verbunden ist wenigstens ein erster Lichtkoppler 4 zu Einkopplung bzw. Auskopplung von Licht in den Lichtleiter. Mit wenigstens einem dieser ersten Lichtkoppler verbunden ist wenigstens ein optischer Sender oder Empfänger. Ob ein Sender oder Empfänger mit dem Lichtleiter verbunden werden soll, wird durch die gewünschte Übertragungsrichtung bestimmt. Soll Licht vom Lichtleiter weg übertragen werden, so ist ein Sender, im anderen Falle ein Empfänger vorzusehen. Zur Informationsübertragung sind die optischen Sender selbstverständlich mit einem Modulationssignal modulierbar. Eine erfindungsgemäße Vorrichtung ist vorzugsweise in einem Computertomografen oder auch in einer Radaranlage einsetzbar.

Weiterhin ist eine zweite Einheit 2 vorgesehen, welche gegenüber der ersten Einheit drehbar gelagert ist. Es wird hier von einer relativen Bewegung der beiden Einheiten gegeneinander ausgegangen und nicht auf drehende bzw. feststehende Einheiten Bezug genommen, da dies ausschließlich eine Frage des Ortsbezugs ist. Dieser zweiten Einheit ist wenigstens ein zweiter Lichtkoppler 5 zugeordnet, der sich mit der Drehung der zweiten Einheit gegenüber der ersten in einer vorgegebenen Bahn bezüglich des Lichtleiters bewegt. Wenigstens einer dieser zweiten Lichtkoppler ist komplementär zum ersten Lichtkoppler wahlweise mit einem optischen Sender oder Empfänger ausgerüstet.

Weiterhin ist entsprechend der Erfindung im optischen Pfad des Lichtleiters 3 an wenigstens einer Stelle ein steuerbarer Absorber 13 vorgesehen. Der steuerbare Absorber 13 kann wahlweise in dem Lichtleiter 3 enthalten sein. Er kann aber auch so in den optischen Pfad des durch den Lichtleiter 3 geführten Lichtes integriert sein, dass das Licht an vorgegebenen bzw. einstellbaren Positionen auf den Absorber trifft. So kann der Absorber an der Kreisbahn selbst oder auch tangential dazu angeordnet sein. Ein solcher steuerbarer Absorber bewirkt eine Dämpfung des durch ihn hindurchtretenden Lichts. Durch eine erfindungsgemäß einstellbare Dämpfung ist die Signalamplitude bzw. die Amplitude unerwünschter Signale gezielt einstellbar. Somit ist auch eine besonders einfache Anpassung an unterschiedliche Dämpfungen des Lichtleiters 3, beispielsweise hervorgerufen durch Fertigungstoleranzen möglich. Grundsätzlich ist durch einen solchen steuerbaren Absorber auch die an einem zweiten Lichtkoppler 5 auskoppelbare Lichtleistung einstellbar. Der Absorber kann auf in der Kreisbahn umlaufendes Licht oder aber auch auf Licht, welches die Kreisbahn, vorzugsweise in tangentialer Richtung, verlassen hat einwirken. Ebenso kann der Absorber auch über Spiegel oder andere Mittel zur Lichtumlenkung bzw. Fokussierung angekoppelt sein.

In einer anderen vorteilhaften Ausgestaltung der Erfindung ist der Lichtleiter erfindungsgemäß in wenigstens zwei Segmente unterteilt, wobei Mittel zur optischen Isolation der Segmente untereinander vorgesehen sind. Eine optische Isolation kann beispielsweise durch absorbierende Materialien zwischen den Segmenten, durch Lichtablenkung zwischen den Segmenten, wie beispielsweise mittels Spiegeln, Gittern oder streuenden Materialien oder aber auch durch eine Richtungstrennung der optischen Signale erfolgen.

Zusätzlich sind die Längen der Segmente sowie die Ausbreitungsrichtungen des Lichts in den Segmenten vorzugsweise derart dimensioniert, dass an den Grenzen zwischen zwei beliebigen Segmenten, in denen das gleiche Signal übertragen wird, das Modulationssignal in Laufzeit beziehungsweise Phase nur geringfügige Unterschiede aufweist. Diese Unterschiede sollen klein gegenüber einer Periodendauer des Modulationssignals sein. Somit weist auch die gesamte Signallaufzeit des Signals vom optischen Sender zum optischen Empfänger an den Grenzen der Segmente nur geringfügige Unterschiede auf. Dadurch lässt sich eine breitbandige Signalübertragung erreichen. Damit eine störungsfreie Übertragung über den gesamten Drehbereich von 360 Grad möglich ist, müssen die oben genannten Voraussetzungen für sämtliche Verbindungsstellen zwischen jeweils zwei benachbarten Segmenten zutreffen.

Selbstverständlich können mit einer erfindungsgemäßen Vorrichtung auch mehrere Signale gleichzeitig übertragen werden. Es muss nur die zuvor genannte Bedingung für jedes dieser Signale selbst erfüllt sein. Die Beziehung zwischen unterschiedlichen Signalen kann beliebig sein.

Die Isolation (Absorber) zwischen mehreren Segmenten kann auch als reflexionsarme Auskoppelstelle realisiert werden. An dieser kann beispielsweise ein Überwachungsempfänger zur Überwachung der Sendesignalamplitude angebracht werden. Ebenso kann diese Isolation wellenlängenabhängig ausgebildet sein. Bevorzugt ist diese als dünne Folie ausgestaltet. Ist der Lichtleiter 3 als verspiegelter Graben ausgeführt, so wird eine Auskoppelstelle vorzugsweise als tangentiale Bohrung ausgeführt.

In einer weiteren vorteilhaften Ausgestaltung der Erfindung sind Gruppen aus jeweils zwei benachbarten Lichtleitern vorgesehen, welche gleich lang sind und eine entgegengesetzte Ausbreitungsrichtung des Lichts aufweisen. Im einfachsten Falle weist die ganze Anordnung, wie oben beschrieben, nur eine einzige solche Gruppe auf. Ebenso können aber mehrere solcher Gruppen entlang des Kreisumfangs angeordnet werden. Diese können auch jeweils unterschiedliche Segmentlängen aufweisen, solange beide Segmente einer Gruppe die gleiche Länge besitzen. So können beispielsweise aus konstruktiven Gründen zur Vereinfachung der Befestigung unterschiedliche Segmentlängen vorgesehen sein. Die Unterteilung in mehrere Segmente bietet auch den Vorteil, dass in jedem Segment unabhängig von den benachbarten Segmenten Daten übertragen werden können. Dies bedeutet, dass eine entsprechend höhere gesamte Datenrate realisierbar ist. Wird beispielsweise eine Anordnung von vier Gruppen über den ganzen Kreisumfang vorgesehen, so lässt sich durch gleichzeitige Übertragung von vier Signalen die gesamte Datenrate vervielfachen.

Vorteilhafterweise ist hierzu der Lichtleiter in eine gerade Anzahl von Segmenten unterteilt. Durch die gerade Anzahl von Segmenten lässt sich die Anordnung aufgrund der Symmetrie besonders einfach realisieren. Eine besonders kostengünstige Ausgestaltung ergibt sich mit zwei Segmenten. Um mit zwei Segmenten eine konstante Laufzeit an den Segmentgrenzen zu erreichen, müssen diese eine gleiche Länge sowie entgegengesetzte Ausbreitungsrichtungen des Lichts aufweisen. Im Falle von zwei Segmenten ist der steuerbare Absorber an einer Position 180 Grad gegenüber der Einkoppelstelle angeordnet. Dies bedeutet im Falle der Lichteinkopplung in die erste Einheit einen um 180 Grad um die Drehachse der beiden Einheiten versetzt angeordneten steuerbaren Absorber.

Bei einer Lichteinkopplung durch die zweite Einheit (und Übertragung von dort in die erste Einheit) wird ein mit der Drehbewegung der zweiten Einheit gegenüber dem Spiegelgraben nachgeführter steuerbarer Absorber eingesetzt. Auch dieser steuerbare Absorber kann beispielsweise durch eine Lageregelung oder hydrostatische bzw. hydrodynamische Lagerung, wie diese für die zweite Lichtkoppler beschrieben ist, in einer Sollposition, vorzugsweise gegenüberliegend der Einkoppelstelle bzw. dem entsprechenden zweiten Lichtkoppler gehalten werden.

In dem wohl häufigsten Fall mit einer Unterteilung des Lichtleiters in zwei gleich lange Kreissegmente wird der steuerbare Absorber 13 Vorteilhafterweise möglichst exakt gegenüber dem ersten Lichtkoppler 4 angeordnet. Am Ort des Absorbers trifft Licht aus beiden Richtungen der Kreissegmente ein. Der Übergabepunkt, an welchem die Lichtintensität aus beiden Richtungen gleich groß ist muss gleichzeitig derjenige Punkt sein, bei dem die Phasenverschiebung zwischen den Signalen der beiden Richtungen gleich Null oder zumindest kleiner als die Dauer eines Datenbits ist. Wird nun ein Absorber mit konstantem Absorptionsfaktor eingesetzt, so entspricht der Übergabepunkt nur dann dem Mittelpunkt des Absorbers, wenn dieser mit gleichen Lichtintensitäten aus beiden Richtungen gespeist wird. Ist die Intensität aus einer ersten Richtung größer als aus der anderen Richtung, so verschiebt sich der Übergabepunkt zu der anderen Richtung hin. Unterschiedliche Lichtintensitäten in den beiden Richtungen können beispielsweise aus Schwankungen bzw. Fertigungstoleranzen an dem ersten Lichtkoppler 4 oder aber auch der Durchgangsdämpfung des Lichtleiters 3 resultieren. Um eine zu starke Verschiebung des Übergabepuriktes und daraus möglicherweise resultierende Übertragungsfehler zu vermeiden, ist eine Justage des Absorbers notwendig. Durch eine dynamische Einstellung des steuerbaren Absorbers 13 kann dies vermieden werden. So kann wahlweise bei dem steuerbaren Absorber das Absorptionsvermögen oder aber auch dessen Position angepasst werden. So kann Vorteilhafterweise in die Richtung des Signals mit der höheren Lichtintensität ein höheres Absorptionsvermögen eingestellt, oder der Absorber durch Steuerung in diese Richtung verschoben werden. Vorteilhafterweise ist hierzu eine Regelung vorgesehen, welche beispielsweise wenigstens einen Lichtsensor zur Bestimmung der Intensitäten des in dem Lichtleiter 3 transportierten Lichts, oder aber einen Sensor zur Bestimmung des Übergabepunktes aufweisen. Eine solche Information zur Bestimmung des Übergabepunktes kann beispielsweise aus der Intensität optischer Signale, aber auch aus Zeitinformationen bzw. Jitterinformationen des empfangenen Signals gewonnen werden.

Eine andere vorteilhafte Ausführungsform sieht vor, dass der steuerbare Absorber auf dem ganzen Umfang des Lichtleiters angeordnet ist und nur die entsprechend benötigten Positionen durch Ansteuerung zur Absorption aktiviert werden. Die nicht aktivierten Bereiche dienen zur Lichtführung ohne Absorption. Der Begriff der Aktivierung bedeutet hier nur die Einstellung einer Absorption. Selbstverständlich ist auch ein in der Wirkung entgegengesetzter steuerbarer Absorber einsetzbar, welcher ohne Aktivierung absorbiert und bei Aktivierung nicht absorbiert.

Eine weitere vorteilhafte Ausgestaltung der Erfindung sieht vor, dass mehrere steuerbare Absorber 13 vorgesehen sind, welche in ihrer Position variabel und/oder an vorgegebenen Positionen aktivierbar und deaktivierbar sind. Durch diese steuerbaren Absorber wird der Lichtleiter 3 in mehrere Segmente unterteilt. Diese Segmente können dann zur gleichzeitigen Übertragung unterschiedlicher Signale herangezogen werden.

Eine andere vorteilhafte Ausgestaltung der Erfindung sieht eine Vorrichtung zur Steuerung eines steuerbaren Absorbers 13 derart vor, dass die Dämpfung eines optischen Signals zwischen einem ersten Lichtkoppler 4 und einem zweiten Lichtkoppler 5 näherungsweise konstant ist.

Besonders _{[DGL101]} günstig ist es, wenn ein steuerbarer Absorber zwei wechselweise aktivierbare Segmente aufweist. Durch diese beiden Absorber Segmente kann nun der Verlauf des Lichtleiters 3 in insgesamt drei Teile unterteilt werden. Beim Durchlaufen des Lichtleiters ausgehend von einer Position des zweiten Lichtkopplers 5 an dem ersten Lichtkoppler 4 ist nun das in Bewegungsrichtung näher liegende Absorbersegment auf minimale Absorption und das entferntere Absorbersegment auf maximale Absorption eingestellt. Somit wird ausschließlich Licht in der ersten Richtung zwischen dem ersten Lichtkoppler 4 und dem zweiten Lichtkoppler 5 übertragen. Da das Signal der zweiten Richtung von dem zweiten Lichtkoppler 5 nicht empfangbar ist, ist auch kein Phasenausgleich notwendig. Sobald nun der zweite Lichtkoppler 5 das auf minimale Absorption eingestellte erste Absorbersegment passiert hat, werden nun die Absorbersegmente umgeschaltet. Dies bedeutet, dass nun das erste Absorbersegment auf maximale Absorption und das zweite Absorbersegment auf minimale Absorption geschaltet wird. Somit empfängt der zweite Lichtkoppler 5 nun das optische Signal aus der zweiten Richtung. Um hier einen störungsfreien Überganges zwischen dem Empfang der ersten Richtung und der zweiten Richtung zu erreichen, werden die Signale aus den beiden Richtungen durch eine erfindungsgemäße Verzögerung aneinander angepasst. Hat der zweite Lichtkoppler 5 das zweite Absorbersegment passiert, so kann er auch ohne Laufzeitausgleich über den Rest der Strecke bewegt werden. Besonders günstig ist es, auf dem Rest der Strecke die zuvor eingeführte Verzögerung allmählich wieder auf null zurückzustellen.

Besonders günstig ist es, wenn der Abstand zwischen den beiden Absorbersegmenten möglichst klein gehalten wird. Weiterhin ist es vorteilhaft, in diesem Falle die Mitte zwischen den Absorbersegmenten gegenüberliegend der Position des ersten Lichtkopplers 4 anzuordnen. Ebenso ist auch eine Unterteilung des Absorbers und/oder des Lichtleiters in mehrere Segmente möglich.

In einer weiteren vorteilhaften Ausgestaltung der Erfindung ist wenigstens ein zweiter Lichtkoppler 5 mit einen Aktuator 8 versehen. Weiterhin ist hierzu wenigstens ein Sensor 9 und eine Steuereinheit 10 zur Justierung der Position des Lichtkopplers vorhanden. Es ist wenigstens ein Sensor zur Ermittlung der Position des Lichtkopplers vorgesehen, dessen Signale an die Steuereinheit übermittelt werden. Die Steuereinheit erzeugt entsprechende Steuersignale für den Aktuator, so dass die Position des Lichtkopplers in wenigstens einer Achse, bevorzugt in zwei Achsen senkrecht zur Tangente der Drehbewegung der beiden Einheiten relativ zum Lichtleiter auf einem vorgegebenen Wert gehalten wird.

Eine andere Ausgestaltung der Erfindung umfasst Mittel zur hydrostatischen oder hydrodynamischen Lagerung derart dass wenigstens ein zweiter Lichtkoppler 5 mittels eines flüssigen oder gasförmigen Mediums bzw. einer auf einem flüssigen oder gasförmigen Medium, vorzugsweise Luft basierenden Lagerung gegenüber dem Lichtleiter in einer definierten Position in wenigstens einer Achse, bevorzugt in zwei Achsen senkrecht zur Tangente der Drehbewegung der beiden Einheiten gehalten wird.

Ein solcher steuerbarer Absorber wird Vorteilhafterweise durch eine Regelung derart angesteuert, dass abhängig von der Übertragungsrichtung des Lichts wahlweise an einen zweiten Lichtkoppler 5 oder einem ersten Lichtkoppler 4 eine konstante Lichtintensität erreicht wird. Eine solche Regelung ist besonders vorteilhaft, um die Dynamik am Eingang des optischen Empfängers zu reduzieren beziehungsweise diesen vor einer optischen Übersteuerung zu schützen.

Weiterhin ist vorteilhafterweise mindestens ein steuerbarer Absorber 13 wellenlängenselektiv ausgebildet. Er ist damit in seinen spektralen Eigenschaften, bevorzugt in seiner Absorptionswellenlänge einstellbar.

Vorzugsweise sind mehrere steuerbare Absorber wellenlängenselektiv ausgebildet und an beiden Orten entsprechend den Segmentgrenzen für die jeweilige Wellenlänge angeordnet. Diese Ausgestaltung erlaubt beispielsweise wellenlängenabhängig unterschiedliche Segmentierungen bzw. unterschiedliche Anordnungen der Segmentgrenzen, wie sie bei Anordnung der Lichtkoppler an unterschiedlichen Positionen notwendig ist.

Weiterhin ist es vorteilhaft, wenn der steuerbare Absorber 13 polarisationsselektiv ausgebildet ist.

In einer weiteren vorteilhaften Ausgestaltung der Erfindung umfasst der steuerbare Absorber 13 reversible Streuzentren, deren Ausbildung durch ein Signal bzw. Energiezufuhr gesteuert werden kann.

Eine weitere vorteilhafte Ausgestaltung der Erfindung besteht darin, dass zur reversiblen Ausbildung von Streuzentren ein Medium vorhanden ist, welches sich bei anlegen eines Signals beziehungsweise bei Energiezufuhr bestimmte physikalische Eigenschaften ändert. Derartige physikalische Eigenschaften sind beispielsweise Brechungsindex, Transmission oder auch das Volumen. Die hier zu Grunde liegenden Effekte können beispielsweise der photorefraktive Effekt, der Effekt der thermischen Nichtlinearität, der rheologische Effekt und andere sein.

Eine andere Ausgestaltung der Erfindung sieht vor, dass der steuerbare Absorber 13 wenigstens ein Flüssigkristallelement umfasst.

Weiterhin ist es vorteilhaft, wenn der steuerbare Absorber 13 Photonische Kristalle umfasst.

Eine weitere Ausbildung der Erfindung sieht vor, dass der steuerbare Absorber 13 ein steuerbares Ablenkelement umfasst, welches einen einstellbaren Anteil des im Lichtleiter 3 geführten Lichtes aus dem Lichtleiter 3 und/oder auf einen Absorber ablenkt.

Eine weitere Ausgestaltung der Erfindung sieht vor, dass der steuerbare Absorber 13 ein interferenzfähiges Mehrschichtsystem aufweist.

In einer andern Vorteilhaften Ausgestaltung weist der steuerbare Absorber 13 ein optisches Gitter auf.

Eine weitere vorteilhafte Ausgestaltung der Erfindung besteht darin, dass der steuerbare Absorber durch einen optischen Schalter in den Lichtpfad geschaltet wird.

Eine weitere vorteilhafte Ausgestaltung der Erfindung sieht vor, dass wenigstens ein steuerbarer Absorber mechanisch steuerbar ist. Die Steuerung erfolgt die vorzugsweise durch ein elektromotorisches, ein elektromagnetisches, ein piezoelektrisches oder auch ein pneumatisches Betätigungselement.

Weiterhin ist es vorteilhaft, wenn wenigstens ein Absorber ein mechanisches Elemente umfasst, welches in den Strahlengang des Lichtleiters eingefahren werden kann. Ein solches mechanisches Element kann beispielsweise ein einfacher Stift sein. Ein solcher Stift kann nun beispielsweise mittels eines Elektromagnets oder eines Elektromotors nach Bedarf in den Strahlengang eingefahren oder ausgefahren sein. Beim Einsatz eines Elektromotors besteht auch noch die Möglichkeit die Tiefe des Einfahrens und damit auch die Dämpfung zu steuern. Ebenso könnte das mechanische Element auch durch eine Feder in den Graben gedrückt werden, so das es durch eine zweite Einheit oder einen zweiten Lichtkoppler im Vorüberfahren aus dem Lichtleiter gedrückt wird, um ein passieren zu ermöglichen.

In einer weiteren vorteilhaften Ausgestaltung ist wenigstens ein Absorber gleichzeitig zum Empfang der optischen Signale geeignet. So kann er beispielsweise ein optischer Empfänger mit hohem Absorptionsvermögen sein. Dieser kann nun zur Auswertung bzw. Überwachung der Signale eingesetzt werden. Hierbei können beispielsweise Signalinhalte, Signalqualität oder auch die Amplitude kontrolliert werden.

In einer weiteren vorteilhaften Ausgestaltung der Erfindung ist wenigstens ein zweiter Lichtkoppler 5 vorgesehen, um Licht aus einem Lichtleiter 3 auch zu koppeln und an einen Absorber weiterzuleiten. Durch diese Ausgestaltung ist der Absorber nicht unmittelbar im Pfad des Lichtleiters 3 angeordnet. Vielmehr kann er durch den zweiten Lichtkoppler an seiner Position verändert werden. Damit ist eine exakte Positionierung, beispielsweise gegenüberliegend dem ersten Lichtkoppler 5 möglich. Weiterhin sind durch eine Anpassung der Lage des zweiten Lichtkopplers 5 in Bezug auf den Lichtleiter 3 Justierungen der Koppeleigenschaften bzw. der Dämpfung möglich.

Eine erfindungsgemäße Vorrichtung weist wenigstens einen zweiten Lichtkoppler 5 auf, welcher für einen richtungsselektiven Abgriff der optischen Signale aus einem Lichtleiter 3 ausgebildet ist. Dieser richtungsselektive Abgriff ermöglicht eine Unterscheidung, aus welcher Richtung das in dem Lichtleiter 3 geführte Licht kommt und eine entsprechend selektive Behandlung des Lichts. Weiterhin ist eine Vorrichtung zur Umschaltung zwischen den beiden Richtungen des Lichts vorgesehen. Die Umschaltung erfolgt zu einem Zeitpunkt, bei dem die Laufzeitdifferenz des Lichts in dem Lichtleiter 3 zwischen dem Punkt der Einspeisung durch einen ersten Lichtkoppler 4 und der aktuellen Position eines zweiten Lichtkopplers 5 kleiner als ein Bit des Modulationssignals des in dem Lichtleiter 3 geführten Lichtes ist. Diese Position ist in einem symmetrischen Aufbau des Lichtleiters 3 gegenüberliegend der Position eines ersten Lichtkopplers 4.

Ein erfindungsgemäßes Verfahren umfasst die Schritte Aussenden von Licht in einen auf einer Kreisbahn angebrachten Lichtleiter in zwei entgegengesetzten Richtungen und Empfangen des in einer ersten Richtung im Lichtleiter übertragenen Lichtes sowie Absorption des in der zweiten Richtung übertragenen Lichtes durch einen steuerbaren Absorber. Weiterhin erfolgt vorteilhafterweise noch eine Steuerung des steuerbaren Absorbers derart, dass die Intensität des Lichts aus den beiden Richtungen gerade an dem Punkt gleich groß eingestellt wird, an dem die Laufzeiten ausgehend von dem Einspeisepunkt in den Lichtleiter gleich groß sind.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt in allgemeiner Form schematisch eine erfindungsgemäße Vorrichtung.
Fig. 2 zeigt schematisch eine erfindungsgemäße Vorrichtung in der Draufsicht.
Fig. 3 veranschaulicht den Verlauf der Intensität des Lichts an der Stelle des Absorbers im Idealfall.
Fig. 4 zeigt den Intensitätsverlauf in einer realen Anordnung mit unterschiedlichen Dämpfungen in den Segmenten des Lichtleiters.

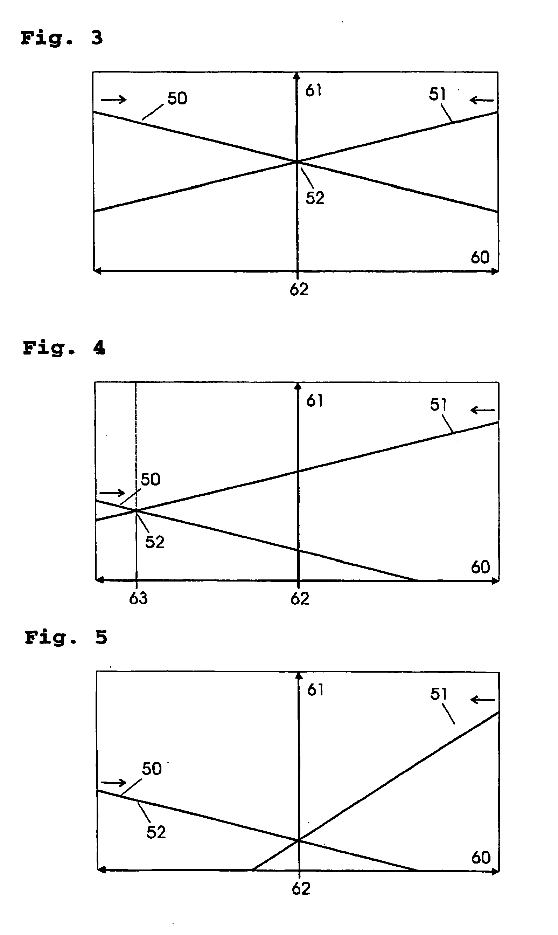

Fig. 4 zeigt den Intensitätsverlauf in einer Anordnung mit einem erfindungsgemäßen steuerbaren Absorber.

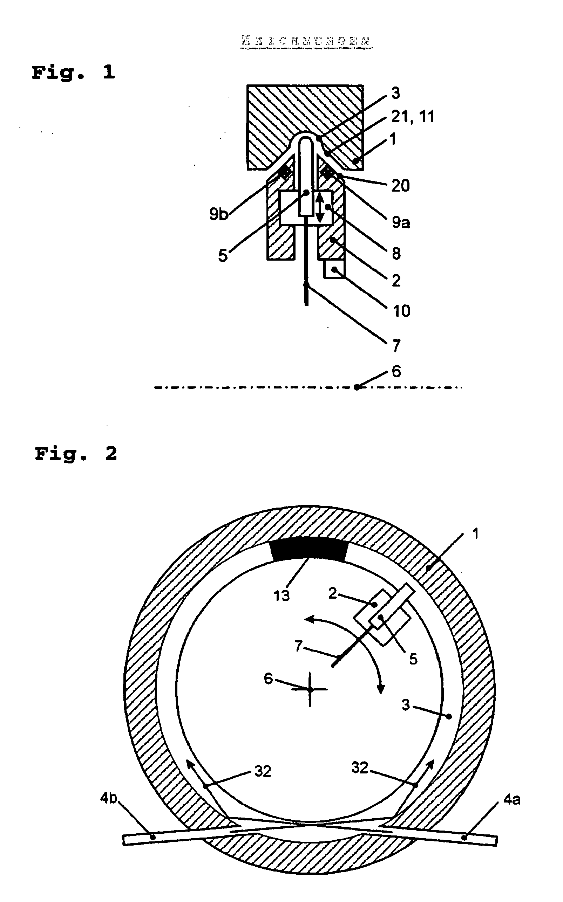

Fig. 1 zeigt in schematischer Form eine erfindungsgemäße Vorrichtung im Schnitt. Darin sind sowohl die erste Einheit 1 als auch die zweite Einheit 2 als Scheiben mit zentrischer Bohrung, welche um die Drehachse 6 drehbar gelagert sind, dargestellt. Der Lichtleiter 3 ist hier beispielhaft als auf der Innenseite verspiegelter Graben dargestellt. Er erstreckt sich um den gesamten Umfang der ersten Einheit. Im Eingriff mit diesem Graben ist ein zweiter Lichtkoppler 5, welcher an der zweiten Einheit 2 angeordnet ist. Dieser Lichtkoppler greift das in dem Lichtleiter geführte Licht ab und leitet es mit einer lichtleitenden Faser 7 weiter. Zur exakten Ausrichtung von Lichtleiter und zweitem Lichtkoppler in einer Achse ist eine hydrodynamische Lagerung sowie eine elektrodynamische Lageregelung vorgesehen. Die hydrodynamische Lagerung basiert auf einem dünnen Luftfilm, welcher durch die Bewegung der beiden Einheiten gegeneinander zwischen der ersten Lagerfläche 21 und der zweiten Lagerfläche 20 ausgebildet wird. Zur Unterstützung sind beispielsweise zusätzliche Mittel zur Luftführung vorgesehen. Weiterhin hat die Vorrichtung vorteilhafterweise Notlaufeigenschaften, die auch noch eine gewisse Führung bei niedrigen Geschwindigkeiten ohne ausreichenden Luftfilm gewährleisten, wie sie beispielsweise in einer Beschleunigungs- oder Bremsphase auftreten. Weiterhin ist zur exakten Positionierung ein Sensor 9 zur Ermittlung des Abstandes zwischen den beiden Einheiten vorgesehen. Dieser Sensor tastet hier den Abstand zu einer Referenzspur 11 ab, welche im vorliegenden Beispiel identisch mit der ersten Lagerfläche 21 ist. Die Ausgangssignale des Sensors werden mittels einer Steuereinheit 10 weiterbearbeitet und dem Aktuator 8 zur exakten Regelung der Lage des zweiten Lichtkopplers zugeführt.

Fig. 2 zeigt in schematischer Form eine erfindungsgemäße Vorrichtung in der Draufsicht. Eine erste Einheit 1 dient zur Aufnahme eines ringförmigen Lichtleiters 3. Dieser Lichtleiter ist beispielsweise ein auf der Innenseite verspiegelter Graben. Eine zweite Einheit 2 dreht sich gegenüber der ersten Einheit um die Drehachse 6. Die zweite Einheit enthält einen zweiten Lichtkoppler 5.

Licht aus einem nicht dargestellten Sender wird bezogen auf das Modulationssignal gleichphasig mittels der beiden ersten Lichtkoppler 4a, 4b in den Lichtleiter 3 eingespeist. Das Licht vom ersten Lichtkoppler 4a läuft auf der rechten Seite der Abbildung bis zum Absorber 13. Gleichzeitig läuft das Licht des ersten Lichtkopplers 4b auf der linken Seite bis zum Absorber 13. Der Absorber ist symmetrisch in Bezug auf die Einkoppelstelle der ersten Lichtkoppler angeordnet, so dass die Lichtwege 32 auf beiden Seiten gleich lang sind. Der Abgriff des Lichts erfolgt mittels eines zweiten Lichtkopplers 5, welcher um die Drehachse 6 entlang der Bahn des Lichtleiters 3 drehbar gelagert ist und das abgegriffene Licht einem optischen Empfänger zuführt. Zur Vereinfachung ist der optische Empfänger ebenfalls nicht abgebildet. Selbstverständlich ist auch eine Übertragung in umgekehrter Richtung möglich.

Fig. 3 veranschaulicht den Verlauf der Intensität des Lichts an der Stelle des Absorbers 13 in einer Anordnung wie sie beispielsweise in Fig. 2 dargestellt ist. So erreicht den Absorber 13 ein erster Lichtstrahl 32 aus einem ersten Lichtkoppler 4a eintreffend von der rechten Seite. Die Intensität dieses Lichtstrahls ist mit der Kurve 51 dargestellt. Ein zweiter Lichtstrahl 32 erreicht den Absorber 13 aus einem weiteren ersten Lichtkoppler 4b eintreffend von der linken Seite in den Absorber. Die Intensität dieses Lichtstrahls ist mit der Kurve 50 dargestellt. Die Intensitätsachse 61 mit zunehmender Intensität nach oben sowie die Ortsachse 60 mit einem Ursprung in der Mitte des Absorbers sind zur verdeutlichung des Intensitätsverlaufs eingezeichnet. Typisch für die Bandbreite des gesamten Übertragungssystems ist der Punkt in der Mitte des Lichtleiters 3. So wird von beiden Seiten durch die Lichtkoppler 4a und 4b gleichphasig moduliertes Licht in den Lichtleiter eingespeist. Sind die beiden Segmente des Lichtleiters gleich lang, so treffen beide Lichtstrahlen Faser gleich in der Mitte des Absorbers an der Stelle 62 zusammen. Durchläuft nun der zweite Lichtkoppler 5 beispielsweise den Lichtleiter am Ort des Absorbers von links nach rechts, so greift er zunächst das Licht aus dem linken Segment mit der höheren Intensität 50 und das Licht aus dem rechten Segment mit geringerer Intensität 51 ab. Auf Grund der geringen Intensität 51 des Lichtes macht sich eine geringfügige Phasenverschiebung gegenüber dem von links kommenden Licht nur wenig bemerkbar. Bei weiterer Bewegung des zweiten Lichtkopplers nach rechts nimmt die Intensität 50 des linken Lichtstrahls ab und die Intensität 51 des rechten Lichtstrahls zu. Der Schnittpunkt ist definiert durch die Position, in der die beiden Intensitäten gleich sind. Idealerweise liegt dieser Schnittpunkt exakt in der Mitte des Absorbers, so dass die Lichtstrahlen von beiden Seiten im Schnittpunkt mit der gleichen Laufzeit und damit der gleichen Phase des Modulationssignals eintreffen.

Fig. 4 zeigt den Intensitätsverlauf in einer realen Anordnung mit unterschiedlichen Dämpfungen in den Segmenten des Lichtleiters 3. Ist beispielsweise die Dämpfung in dem bezüglich des Absorbers rechts liegenden Segments des Lichtleiters 3 niedriger als die des links liegenden Segments, so ist am Eintrittspunkt die Intensität 51 des von rechts kommenden Lichtstrahls größer als die Intensität 50 des von links kommenden Lichtstrahls. Entsprechend verschiebt sich der Schnittpunkt, an dem die beiden Intensitäten gleichgroß sind zu dem Punkt 63 links von dem Mittelpunkt 62 des Absorbers. An diesem Schnittpunkt ist die Laufzeit des von links kommenden Lichtstrahls kürzer als die des von rechts kommenden Lichtstrahls, so dass sich eine Phasenverschiebung bei der Addition der beiden Signale ergibt. Dies führt zu einer meist nicht vernachlässigbaren Reduzierung der übertragbaren Bandbreite.

Diese Anordnung ist auch zum Ausgleich unterschiedlicher Weglängen der Segmente des Lichtleiters geeignet. Ebenso können dadurch Lagetoleranzen des Absorbers selbst ausgeglichen werden.

Fig. 5 zeigt eine Anordnung mit einem erfindungsgemäßen steuerbaren Absorber. In diesen Absorber wird nun ausgehend von dem Fall aus Fig. 4 mit einer von rechts eintretenden höheren Intensität 51 in der entsprechenden rechten Seite des Absorbers eine höhere Dämpfung eingestellt, so dass der Schnittpunkt in der exakten geometrischen Mitte 62 des Absorbers und somit auch in der geometrischen Mitte des Lichtleiters 3 zu liegen kommt.

Die Vorrichtung ist auch zum Ausgleich unterschiedlicher Dämpfungen bei unterschiedlichen Wellenlängen bzw. Polarisationen in den Segmenten des Lichtleiters geeignet.

### Bezugszeichenliste

- 1: Erste Einheit
- 2: Zweite Einheit
- 3: Lichtleiter
- 4: Erster Lichtkoppler
- 5: zweiter Lichtkoppler
- 6: Drehachse der Drehung zwischen erster und zweiter Einheit
- 7: Lichtleitende Faser
- 8: Aktuator
- 9: Sensor
- 10: Steuereinheit
- 11: Referenzspur
- 12: Mittel zur hydrostatischen oder hydrodynamischen Lagerung
- 13: Absorber
- 20: zweite Lagerfläche
- 21: erste Lagerfläche
- 32: Lichtstrahl
- 50: Intensität des von links kommenden Lichtstrahls
- 51: Intensität des von rechts kommenden Lichtstrahls
- 60: Ortsachse
- 61: Intensitätsachse
- 62: Mittelpunkt des Lichtleiters
- 63: Schnittpunkt

## Patentansprüche

1. Vorrichtung zur Übertragung modulierter optischer Signale zwischen einer ersten Einheit (1) und einer zweiten Einheit (2), wobei die erste Einheit gegenüber der zweiten Einheit um eine Drehachse (6) drehbar gelagert ist, umfassend
- einen Lichtleiter (3) entlang einer Kreisbahn an der ersten Einheit,
- wenigstens einen mit dem Lichtleiter verbundenen ersten Lichtkoppler (4) zur Lichtein- bzw. Auskopplung in den Lichtleiter,
- wenigstens einen zweiten Lichtkoppler (5), welcher an der zweiten Einheit angeordnet ist, und gegenüber dem Lichtleiter beweglich ist, zur Lichtein- bzw. Auskopplung in den Lichtleiter,
wobei der
wenigstens eine erste Lichtkoppler (4) mit dem Lichtleiter (3) zur Lichtein- bzw. Auskopplung in jeweils eine erste Richtung und eine dazu entgegengesetzte zweite Richtung des Lichtleiters (3) sowie wenigstens ein Absorber (13) vorgesehen ist, **dadurch gekennzeichet ,dass** der Absorber (13) steuerbar ist und wenigstens zwei wechselweise aktivierbare Segmente aufweist, die derart angesteuert werden, dass der wenigstens eine zweite Lichtkoppler (5) zu jedem Zeitpunkt zumindest ein Signal aus der ersten oder zweiten Richtung empfängt.

2. Vorrichtung nach Anspruch 1,
**dadurch gekennzeichnet, dass**
der Lichtleiter (3) in mehrere Segmente unterteilt ist, wobei jedes Segment durch einen Lichtkoppler (4) mit Licht gespeist wird, und die Längen der Segmente sowie die Ausbreitungsrichtungen des Lichts in den Segmenten und evtl. vorhandene Zuleitungen zu den Segmenten derart gestaltet sind, dass an den Grenzen zwischen zwei beliebigen Segmenten, in denen das gleiche Signal übertragen wird, das Modulationssignal in Laufzeit beziehungsweise Phase nur geringfügige Unterschiede aufweist, welche klein gegenüber einer Periodendauer des Modulationssignals sind.

3. Vorrichtung nach einem der vorhergehenden Ansprüche,
**dadurch gekennzeichnet, dass**
Gruppen aus jeweils zwei benachbarten Segmenten vorgesehen sind, wobei die Segmente die gleiche Laufzeit und eine entgegengesetzte Ausbreitungsrichtung des Lichts aufweisen.

4. Vorrichtung nach Anspruch 2,
**dadurch gekennzeichnet, dass**
wenigstens ein steuerbarer Absorber (13) an einer einem ersten Lichtkoppler (4) bezogen auf die Drehachse (6) gegenüberliegenden Position angeordnet ist, wodurch der Lichtleiter (3) in vorzugsweise zwei Segmente unterteilt wird.

5. Vorrichtung nach einem der vorhergehenden Ansprüche,
**dadurch gekennzeichnet, dass**
wenigstens ein steuerbarer Absorber (13) entlang des Lichtleiters (3) angeordnet ist und nur der zur Absorption benötigte Bereich durch ein Aktivierungssignal aktiviert wird, so dass dieser vorzugsweise mit einem zweiten Lichtkoppler (5) besonders bevorzugt an einer diesem gegenüberliegenden Position synchron beweglich ist.

6. Vorrichtung nach einem der vorhergehenden Ansprüche,
**dadurch gekennzeichnet, dass**
mehrere steuerbare Absorber (13) vorgesehen sind, welche in ihrer Position variabel und/oder an vorgegebenen Positionen aktivierbar und deaktivierbar sind, so dass durch diese der Lichtleiter (3) in mehrere Segmente unterteilt wird, welche zur gleichzeitigen Übertragung unterschiedlicher Signale geeignet sind.

7. Vorrichtung nach einem der vorhergehenden Ansprüche,
**dadurch gekennzeichnet, dass**
wenigstens ein steuerbarer Absorber (13) mit einem zweiten Lichtkoppler (5) synchron beweglich, vorzugsweise an einer diesem gegenüberliegenden Position vorgesehen ist.

8. Vorrichtung nach einem der vorhergehenden Ansprüche,
**dadurch gekennzeichnet, dass**
wenigstens ein zweiter Lichtkoppler (5) einen Aktuator (8), sowie hierzu wenigstens einen Sensor (9) und eine Steuereinheit (10) zur Justierung der Position des Lichtkopplers aufweist, wobei wenigstens ein Sensor zur Ermittlung der Position des Lichtkopplers vorgesehen ist, dessen Signale an die Steuereinheit übermittelt werden, und die Steuereinheit entsprechende Steuersignale für den Aktuator erzeugt, so dass die Position des Lichtkopplers in wenigstens einer Achse, bevorzugt in zwei Achsen senkrecht zur Tangente der Drehbewegung der beiden Einheiten relativ zum Lichtleiter auf einem vorgegebenen Wert gehalten wird.

9. Vorrichtung nach einem der vorhergehenden Ansprüche,
**dadurch gekennzeichnet, dass**
Mittel zur hydrostatischen oder hydrodynamischen Lagerung vorgesehen sind, derart dass wenigstens ein zweiter Lichtkoppler (5) mittels eines flüssigen oder gasförmigen Mediums bzw. einer auf einem flüssigen oder gasförmigen Medium, vorzugsweise Luft basierenden Lagerung gegenüber dem Lichtleiter in einer definierten Position in wenigstens einer Achse, bevorzugt in zwei Achsen senkrecht zur Tangente der Drehbewegung der beiden Einheiten gehalten wird.

10. Vorrichtung nach einem der vorhergehenden Ansprüche,
**dadurch gekennzeichnet, dass**
eine Vorrichtung zur Steuerung eines steuerbaren Absorbers (13) derart vorgesehen ist, dass die Dämpfung eines optischen Signals zwischen einem ersten Lichtkoppler (4) und einem zweiten Lichtkoppler (5) näherungsweise konstant ist.

11. Vorrichtung nach einem der vorhergehenden Ansprüche,
**dadurch gekennzeichnet, dass**
wenigstens ein steuerbarer Absorber (13) wellenlängenselektiv ausgebildet ist.

12. Vorrichtung nach einem der vorhergehenden Ansprüche,
**dadurch gekennzeichnet, dass**
wenigstens ein steuerbarer Absorber (13) polarisationsselektiv ausgebildet ist.

13. Vorrichtung nach einem der vorhergehenden Ansprüche,
**dadurch gekennzeichnet, dass**
wenigstens ein steuerbarer Absorber (13) reversible Streuzentren umfasst, deren Ausbildung durch ein Signal bzw. Energiezufuhr gesteuert werden kann.

14. Vorrichtung nach einem der vorhergehenden Ansprüche,
**dadurch gekennzeichnet, dass**
wenigstens ein steuerbarer Absorber (13) wenigstens ein Flüssigkristallelement umfasst.

15. Vorrichtung nach einem der vorhergehenden Ansprüche,
**dadurch gekennzeichnet, dass**
wenigstens ein steuerbarer Absorber (13) Photonische Kristalle umfasst.

16. Vorrichtung nach einem der vorhergehenden Ansprüche,
**dadurch gekennzeichnet, dass**
wenigstens ein steuerbarer Absorber (13) ein steuerbares Ablenkelement umfasst, welches einen einstellbaren Anteil des im Lichtleiter (3) geführten Lichtes aus dem Lichtleiter (3) und/oder auf einen Absorber ablenkt.

17. Vorrichtung nach einem der vorhergehenden Ansprüche,
**dadurch gekennzeichnet, dass**
wenigstens ein steuerbarer Absorber (13) ein interferenzfähiges Mehrschichtsystem aufweist.

18. Vorrichtung nach einem der vorhergehenden Ansprüche,
**dadurch gekennzeichnet, dass**
wenigstens ein steuerbarer Absorber (13) ein optisches Gitter aufweist.

19. Vorrichtung nach einem der vorhergehenden Ansprüche,
**dadurch gekennzeichnet, dass**
wenigstens ein steuerbarer Absorber durch einen optischen Schalter in den Lichtpfad geschaltet wird.

20. Vorrichtung nach einem der vorhergehenden Ansprüche,
**dadurch gekennzeichnet, dass**
wenigstens ein steuerbarer Absorber mechanisch steuerbar ist und vorzugsweise durch ein elektromotorisches, elektromagnetisches, piezoelektrisches oder pneumatisches Element betätigbar ist.

21. Vorrichtung nach einem der vorhergehenden Ansprüche,
**dadurch gekennzeichnet, dass**
wenigstens ein steuerbarer Absorber ein mechanisches Element umfasst, welches in den Strahlengang des Lichtleiters eingefahren beziehungsweise ausgefahren werden kann.

22. Vorrichtung nach einem der vorhergehenden Ansprüche,
**dadurch gekennzeichnet, dass**
wenigstens ein steuerbarer Absorber gleichzeitig zum Empfang der optischen Signale, zumindest zur Auswertung der Signalamplitude geeignet ist.

23. Vorrichtung nach einem der vorhergehenden Ansprüche,
**dadurch gekennzeichnet, dass**
wenigstens ein zweiter Lichtkoppler (5) vorgesehen ist, welcher Licht aus einem Lichtleiter (3) auskoppelt und an einen Absorber weiterleitet.

24. Vorrichtung nach Anspruch 1,
**dadurch gekennzeichnet, dass**
wenigstens ein zweiter Lichtkoppler (5) für einen richtungsselektiven Abgriff optischer Signale aus einem Lichtleiter (3) ausgebildet ist und weiterhin eine Vorrichtung zur Umschaltung zwischen den beiden entgegengesetzten Ausbreitungsrichtungen der optischen Signale derart vorgesehen ist, dass diese an einer Position, gegenüberliegend einem ersten Lichtkoppler (4) derart erfolgt, dass die Laufzeitdifferenz zwischen den beiden sich in entgegengesetzten Richtungen ausbreitenden Signalen kleiner als ein Bit des Modulationssignals ist.

25. Verfahren zum Betrieb einer Vorrichtung entsprechend Anspruch 1 umfassend die folgenden Schritte:
- Aussendung von moduliertem Licht in einen auf einer Kreisbahn angeordneten Lichtleiter in zwei entgegengesetzten Richtungen,
- Empfangen des in einer ersten Richtung im Lichtleiter übertragenen Lichtes, Absorption des in der zweiten Richtung übertragenen Lichtes durch wenigstens einen steuerbaren Absorber
- Steuern des steuerbaren Absorbers derart, dass an vorgegebenen Schnittpunkten mit gleicher Phase des modulierten Lichtes aus den entgegengesetzten Richtungen die Amplituden der Signale aus beiden Richtungen gleich groß sind.

## Claims

1. An apparatus for transmitting modulated optical signals between a first unit (1) and a second unit (2), with the first unit being rotatably held about a rotational axis (6) relative to the second unit, comprising
- a light guide (3) along a circular orbit on the first unit;
- at least a first light coupler (4) which is connected with the light guide for injecting light into and extracting light from the light guide;
- at least a second light coupler (5) which is arranged on the second unit and is movable relative to the light guide, for injecting light into and extracting light from the light guide, with the at least one first light coupler (4) with the light guide (3) being provided for injecting or extracting light in a first direction and a second direction of the light guide which is opposite thereto, and at least one absorber (13) is provided, **characterized in that** the absorber (13) is controllable and comprises at least two segments which can be activated in an alternating manner, that the at least one second light coupler (5) receives at any time at least one signal from the first or second direction.

2. An apparatus according to claim 1, **characterized in that** the light guide (3) is subdivided into several segments; with each segment being supplied with light through a light coupler (4) and the lengths of the segments and the directions of propagation of the light in the segments and feed lines, if any, to the segments being arranged in such a way that the modulation signal has only slight differences in transit time or phase at the boundaries between two random segments in which the same signal is transmitted, which difference is small compared to a period duration of the modulation signal.

3. An apparatus according to one of the preceding claims, **characterized in that** groups of two adjacent segments each are provided, with the segments having the same transit time and an opposite direction of propagation of the light.

4. An apparatus according to claim 2, **characterized in that** at least one controllable absorber (13) is arranged at a position opposite to a first light coupler (4) relative to the rotational axis (6), as a result of which the light guide (3) is preferably divided into two segments.

5. An apparatus according to one of the preceding claims, **characterized in that** at least one controllable absorber (13) is arranged along the light guide (3) and only the region required for absorption is activated by an activation signal, so that the same is synchronously movable preferably with a second light coupler (5), more preferably at a position opposite the same.

6. An apparatus according to one of the preceding claims, **characterized in that** several controllable absorbers (13) are provided which are variable in their position and/or can be activated or deactivated at predetermined positions, so that the light guide (3) is thereby divided into several segments which are suitable for the simultaneous transmission of different signals.

7. An apparatus according to one of the preceding claims, **characterized in that** at least one controllable absorber (13) is synchronously movable with a second light coupler (5), preferably provided at a position opposite of the same.

8. An apparatus according to one of the preceding claims, **characterized in that** at least a second light coupler (5) comprises an actuator (8) and, in combination with the same, at least one sensor (9) and a control unit (10) for adjusting the position of the light coupler, with at least one sensor being provided for determining the position of the light coupler whose signals are sent to the control unit, and the control unit generates respective control signals for the actuator, so that the position of the light coupler is held at a predetermined value in at least one axis, preferably in two axes, perpendicular to the tangent of the rotational movement of the two units relative to the light guide.

9. An apparatus according to one of the preceding claims, **characterized in that** means for hydrostatic or hydrodynamic bearing are provided, such that at least one second light coupler (5) is held by means of a liquid or gaseous medium or by means of a bearing based on a liquid or gaseous medium, preferably air, relative to the light guide in a defined position in at least one axis, preferably in two axes, perpendicular to the tangent of the rotational movement of the two units.

10. An apparatus according to one of the preceding claims, **characterized in that** an apparatus for controlling a controllable absorber (13) is arranged in such a way that the damping of an optical signal between a first light coupler (4) and a second light coupler (5) is approximately constant.

11. An apparatus according to one of the preceding claims, **characterized in that** at least one controllable absorber (13) is arranged to be wavelength-selective.

12. An apparatus according to one of the preceding claims, **characterized in that** at least one controllable absorber (13) is arranged to be polarization-selective.

13. An apparatus according to one of the preceding claims, **characterized in that** at least one controllable absorber (13) comprises reversible scattering centers whose arrangement can be controlled by a signal or energy supply.

14. An apparatus according to one of the preceding claims, **characterized in that** at least one controllable absorber (13) comprises at least one liquid-crystal element.

15. An apparatus according to one of the preceding claims, **characterized in that** at least one controllable absorber (13) comprises photonic crystals.

16. An apparatus according to one of the preceding claims, **characterized in that** at least one controllable absorber (13) comprises a controllable deflection element which deflects an adjustable portion of the light guided in the light guide (3) out of the light guide (3) and/or onto an absorber.

17. An apparatus according to one of the preceding claims, **characterized in that** at least one controllable absorber (13) comprises an interference-capable multilayer system.

18. An apparatus according to one of the preceding claims, **characterized in that** at least one controllable absorber (13) comprises an optical grating.

19. An apparatus according to one of the preceding claims, **characterized in that** at least one controllable absorber is switched by an optical switch into the light path.

20. An apparatus according to one of the preceding claims, **characterized in that** at least one controllable absorber is mechanically controllable and preferably can be actuated by an electromotive, electromagnetic, piezoelectric or pneumatic element.

21. An apparatus according to one of the preceding claims, **characterized in that** at least one controllable absorber comprises a mechanical element which can be moved into or out of the beam path of the light guide.

22. An apparatus according to one of the preceding claims, **characterized in that** at least one controllable absorber is simultaneously suitable for receiving the optical signals, but at least for evaluating the signal amplitude.

23. An apparatus according to one of the preceding claims, **characterized in that** at least one second light coupler (5) is provided which extracts the light from a light guide (3) and forwards it to an absorber.

24. An apparatus according to claim 1, **characterized in that** at least one second light coupler (5) is arranged for direction-selective tapping of optical signals from a light guide (3), and furthermore an apparatus is provided for changing over between the two opposite directions of propagation of the optical signals in such a way that the same occurs at a position opposite a first light coupler (4) in such a way that the transit time difference between the two signals propagating in opposite directions is smaller than a bit of the modulation signal.

25. A method for operating an apparatus according to claim 1, comprising the following steps:
- emission of modulated light in a light guide arranged on a circular orbit in two opposite directions;
- receiving of the light transmitted in a first direction in the light guide, absorption of the light transmitted in the second direction by at least one controllable absorber;
- controlling of the controllable absorber in such a way that the amplitudes of the signals from both directions are of the same size at predetermined points of intersection with the same phase of the modulated light from the opposite directions.

## Revendications

1. Dispositif pour transmettre des signaux optiques modulés entre une première unité (1) et une deuxième unité (2), la première unité étant montée tournante autour d'un axe de rotation (6) par rapport à la deuxième unité, comprenant
- un guide de lumière (3) le long d'une trajectoire circulaire sur la première unité,
- au moins un premier coupleur de lumière (4) relié au guide de lumière pour coupler et découpler la lumière dans le guide de lumière,
- au moins un deuxième coupleur de lumière (5) qui est disposé sur la deuxième unité et est mobile par rapport au guide de lumière, pour coupler et découpler la lumière dans le guide de lumière,
dans lequel il est prévu ledit au moins un premier coupleur de lumière (4) avec le guide de lumière (3) pour coupler et découpler la lumière chaque fois dans une première direction et dans une deuxième direction, opposée à la première, du guide de lumière (3) ainsi qu'au moins un absorbeur (13),
**caractérisé en ce que** l'absorbeur (13) est commandable et présente au moins deux segments activables alternativement qui sont commandés de manière que ledit au moins un deuxième coupleur de lumière (5) reçoive à chaque instant au moins un signal de la première ou de la deuxième direction.

2. Dispositif selon la revendication 1,
**caractérisé en ce**
**que** le guide de lumière (3) est divisé en plusieurs segments, chaque segment étant alimenté en lumière par un coupleur de lumière (4) et les longueurs des segments ainsi que les directions de propagation de la lumière dans les segments et dans des lignes d'amenée aux segments éventuellement présentes étant conçues ou réalisées de manière qu'aux frontières entre deux segments quelconques dans lesquels le même signal est transmis, le signal de modulation ne présente, en temps de parcours, respectivement en phase, que de faibles différences, lesquelles sont petites par rapport à la durée d'une période du signal de modulation.

3. Dispositif selon l'une des revendications précédentes,
**caractérisé en ce**
**que** des groupes de chaque fois deux segments voisins sont prévus, les segments présentant le même temps de parcours et une direction de propagation opposée de la lumière.

4. Dispositif selon la revendication 2,
**caractérisé en ce**
**qu'**au moins un absorbeur commandable (13) est disposé à une position opposée à un premier coupleur de lumière (4) par rapport à l'axe de rotation (6), moyennant quoi le guide de lumière (3) est subdivisé en, de préférence, deux segments.

5. Dispositif selon l'une des revendications précédentes,
**caractérisé en ce**
**qu'**au moins un absorbeur commandable (13) est disposé le long du guide de lumière (3) et seule la zone nécessaire pour l'absorption est activée par un signal d'activation, de sorte que celui-ci est de préférence mobile de manière synchrone avec un deuxième coupleur de lumière (5), particulièrement de préférence à une position opposée à celui-ci.

6. Dispositif selon l'une des revendications précédentes,
**caractérisé en ce**
**que** plusieurs absorbeurs commandables (13) sont prévus, dont les positions sont variables et qui peuvent être activés et désactivés dans des positions prédéfinies, de sorte que ceux-ci divisent le guide de lumière (3) en plusieurs segments qui permettent la transmission simultanée de différents signaux.

7. Dispositif selon l'une des revendications précédentes,
**caractérisé en ce**
**qu'**au moins un absorbeur commandable (13) est prévu mobile de manière synchrone avec un deuxième coupleur de lumière (5), de préférence à une position opposée à celui-ci.

8. Dispositif selon l'une des revendications précédentes,
**caractérisé en ce**
**qu'**au moins un deuxième coupleur de lumière (5) présente un actionneur (8) ainsi que pour celui-ci au moins un capteur (9) et une unité de commande (10) pour ajuster la position du coupleur de lumière, au moins un capteur pour déterminer la position du coupleur de lumière étant prévu, dont les signaux sont transmis à l'unité de commande, et l'unité de commande génère des signaux de commande correspondants pour l'actionneur, de manière que la position du coupleur de lumière soit maintenue à une valeur prédéfinie par rapport au guide de lumière sur au moins un axe, de préférence sur deux axes perpendiculairement à la tangente au mouvement de rotation des deux unités.

9. Dispositif selon l'une des revendications précédentes,
**caractérisé en ce**
**que** des moyens de support hydrostatique ou hydrodynamique sont prévus, de manière qu'au moins un deuxième coupleur de lumière (5) soit maintenu au moyen d'un milieu liquide ou gazeux, respectivement d'un support basé sur un milieu liquide ou gazeux, de préférence l'air, dans une position définie par rapport au guide de lumière sur au moins un axe, de préférence sur deux axes perpendiculairement à la tangente au mouvement de rotation des deux unités.

10. Dispositif selon l'une des revendications précédentes,
**caractérisé en ce**
**qu'**il est prévu un dispositif pour commander un absorbeur commandable (13) de manière que l'atténuation d'un signal optique entre un premier coupleur de lumière (4) et un deuxième coupleur de lumière (5) soit approximativement constante.

11. Dispositif selon l'une des revendications précédentes,
**caractérisé en ce**
**qu'**au moins un absorbeur commandable (13) est réalisé de façon à être sélectif pour les longueurs d'onde.

12. Dispositif selon l'une des revendications précédentes,
**caractérisé en ce**
**qu'**au moins un absorbeur commandable (13) est réalisé de façon à être sélectif en polarisation.

13. Dispositif selon l'une des revendications précédentes,
**caractérisé en ce**
**qu'**au moins un absorbeur commandable (13) comprend des centres de diffusion réversibles dont la formation peut être commandée par un signal ou par l'apport d'énergie.

14. Dispositif selon l'une des revendications précédentes,
**caractérisé en ce**
**qu'**au moins un absorbeur commandable (13) comprend au moins un élément à cristaux liquides.

15. Dispositif selon l'une des revendications précédentes,
**caractérisé en ce**
**qu'**au moins un absorbeur commandable (13) comprend des cristaux photoniques.

16. Dispositif selon l'une des revendications précédentes,
**caractérisé en ce**
**qu'**au moins un absorbeur commandable (13) comprend un élément de déviation commandable qui dévie une part réglable de la lumière guidée dans le guide de lumière (3) hors du guide de lumière (3) et/ou sur un absorbeur.

17. Dispositif selon l'une des revendications précédentes,
**caractérisé en ce**
**qu'**au moins un absorbeur commandable (13) présente un système multicouches capable d'interférence.

18. Dispositif selon l'une des revendications précédentes,
**caractérisé en ce**
**qu'**au moins un absorbeur commandable (13) présente un réseau de diffraction optique.

19. Dispositif selon l'une des revendications précédentes,
**caractérisé en ce**
**qu'**au moins un absorbeur commandable est commuté dans le chemin optique par un commutateur optique.

20. Dispositif selon l'une des revendications précédentes,
**caractérisé en ce**
**qu'**au moins un absorbeur commandable est commandable mécaniquement et de préférence actionnable par un élément électromoteur, électromagnétique, piézoélectrique ou pneumatique.

21. Dispositif selon l'une des revendications précédentes,
**caractérisé en ce**
**qu'**au moins un absorbeur commandable comprend un élément mécanique qui peut être entré et sorti dans le chemin optique du guide de lumière.

22. Dispositif selon l'une des revendications précédentes,
**caractérisé en ce**
**qu'**au moins un absorbeur commandable permet, en même temps que la réception des signaux optiques, au moins l'évaluation de l'amplitude des signaux.

23. Dispositif selon l'une des revendications précédentes,
**caractérisé en ce**
**qu'**il est prévu au moins un deuxième coupleur de lumière (5) qui découple la lumière d'un guide de lumière (3) et la transmet à un absorbeur.

24. Dispositif selon la revendication 1,
**caractérisé en ce**
**qu'**au moins un deuxième coupleur de lumière (5) est réalisé pour opérer un prélèvement sélectif en direction de signaux optiques d'un guide de lumière (3) et qu'il est prévu, en outre, un dispositif pour la commutation entre les deux directions de propagation opposées des signaux optiques, de manière que celle-ci ait lieu à une position opposée à un premier coupleur de lumière (4) de manière que la différence de temps de parcours entre les deux signaux se propageant dans des directions opposées soit plus petite qu'un bit du signal de modulation.

25. Procédé pour exploiter ou pour faire fonctionner un dispositif selon la revendication 1, comprenant les étapes suivantes :
- émission de lumière modulée dans deux directions opposées dans un guide de lumière disposé sur une trajectoire circulaire,
- réception de la lumière transmise dans une première direction dans le guide de lumière, absorption de la lumière transmise dans la deuxième direction par au moins un absorbeur commandable,
- commande de l'absorbeur commandable de manière qu'à des points d'intersection prédéfinis de même phase de la lumière modulée provenant des directions opposées, les amplitudes des signaux provenant des deux directions soient égales.
